# EUROPEAN PATENT SPECIFICATION

(11) **EP 3 877 164 B1**
(45) Date of publication and mention of the grant of the patent: **09.08.2023**
(21) Application number: 19805864.6
(22) Date of filing: 31.10.2019
(51) Int. Cl.: B29D 30/00, B26D 7/10, B26F 3/02

(54) **METHOD AND UNIT FOR MANUFACTURING NOISE REDUCING ELEMENTS**
VERFAHREN UND EINHEIT ZUR HERSTELLUNG VON GERÄUSCHREDUZIERUNGSELEMENTEN
PROCÉDÉ ET UNITÉ DE FABRICATION D'ÉLÉMENTS DE RÉDUCTION DU BRUIT

(30) Priority: 07.11.2018 IT 201800010106
(43) Date of publication of application: 15.09.2021
(73) Proprietor: Pirelli Tyre S.p.A., 20126 Milano (IT)
(72) Inventor: BOSCAINO, Ivan Gildo, 20126 Milano (IT); DONETTI, Raffaella, 20126 Milano (IT); PUPPI, Cristiano, 20126 Milano (IT)
(74) Representative: Vittorangeli, Lucia
(86) International application number: PCT/IB2019/059350
(87) International publication number: WO 2020/095158

(56) References cited:
- WO-A1-2016/067192
- WO-A1-2017/109607
- WO-A1-2018/096458
- US-A1- 2011 048 187

## Description

The present invention relates to a method and a unit for manufacturing noise reducing elements, preferably in a substantially automatic manner.

The present invention further relates to a process and an apparatus for applying noise reducing elements to a tyre for vehicle wheels, preferably in a substantially automatic manner. The term "automatic" is used to indicate an operation carried out by mechanical devices, without the need for manual intervention by an operator. "Mechanical devices" means entirely mechanical, electromechanical, hydraulic and pneumatic devices, possibly controlled by a control unit using special software.

The expression "substantially automatic" is used to indicate that most of the operations are carried out by the mechanical devices mentioned above and that the manual intervention of an operator is limited to a few and specific operations. In the specific case of the present invention, the manual intervention of the operator is at most limited to the initial arrangement of the noise reducing elements, for example to the positioning of the noise reducing bodies on a support device, such as for example a conveyor belt, a roller belt, etc.

The term "noise reducing element" is used to indicate an element comprising a noise reducing body and a layer of adhesive material that covers a surface of the noise reducing body. The noise reducing element is such that, once associated with a tyre for vehicle wheels, it has the ability to attenuate the noise produced by the tyre during use. This capacity is preferably imparted to the aforesaid element by the type of material with which the noise reducing body is made. A suitable material for this purpose is for example a porous sound-absorbing material, such as for example an expanded polymeric material, for example open-cell polyurethane foam.

The terms "radial" and "axial" and the expressions "radially inner/outer" and "axially inner/outer" are used with reference to the radial direction of the tyre (i.e. to a direction perpendicular to the axis of rotation of the tyre) and to the axial direction of the tyre (i.e. to a direction parallel to the axis of rotation of the tyre). The terms "circumferential" and "circumferentially" are instead used with reference to the annular development of the tyre.

The expression "feeding path" and "input path" are used to indicate a movement in a specific direction. In the case of conveyors and in particular of conveyor belts, these expressions are used to indicate a movement in a direction of movement parallel to the main direction of the conveyor. The "feeding path" and the "input path" correspond therefore respectively to the advancement direction of what is placed on the conveyor.

The expressions "downstream" or "head", and "upstream" or "tail", are used with reference to the above feeding and/or input path. Therefore, assuming for example a feeding path from left to right, a "downstream" or "head" position with respect to any reference element indicates a position to the right of said reference element and an "upstream" or "tail" position indicates a position to the left of said reference element.

The expression "close proximity" is used to indicate a positioning with mutual contact between two adjacent noise reducing bodies or elements or at a distance that is absolutely negligible compared to the longitudinal extension of the same noise reducing bodies or elements.

The term "precursor" of a noise reducing element is used to indicate an assembly made of a noise reducing body attached to a portion of a tape of adhesive material, which advances along the feeding path. Since the tape of adhesive material extends continuously under all the noise reducing bodies which rest thereon, two adjacent precursors are joined together by a passage portion of the tape of adhesive material.

By "electromagnetic radiations in the infrared range" it is meant electromagnetic radiations with a frequency band of the electromagnetic spectrum lower than that of visible light and greater than that of radio waves, or with a wavelength between 700 nm and 1 mm.

The term "intensity" of electromagnetic radiations refers to the amount of energy transported per unit of time and per unit of surface.

The expression "intensity of electromagnetic radiations to which the head precursor is exposed" means the intensity verified on the head precursor.

Document WO2016/067192, on behalf of the same Applicant, discloses a process and an apparatus for applying noise reducing elements to a tyre for vehicle wheels. The noise reducing body is arranged on a first conveyor belt having, on an upper surface thereof, a continuous film supporting a layer of adhesive material. The noise reducing body is then pressed against the continuous film so as to make it integrally adhere to a portion of the layer of adhesive material. Due to the movement of the first conveyor belt, the noise reducing body is subsequently transferred to a second conveyor belt located downstream of the first conveyor belt. During this transfer the continuous film is retained at the first conveyor belt and, as soon as the noise reducing body has left the first conveyor belt, the layer of adhesive material which adheres to the noise reducing body is detached from the layer of material adhesive present on the first conveyor belt. The detachment can occur by tearing or ripping, that is, due to the relative movement of the second conveyor belt with respect to the first conveyor belt (in the case in which the adhesive material has weak internal bonds) or due to the cutting action exerted by a suitable blade or hot wire provided between the two conveyor belts (in case the adhesive material has very strong internal bonds). The noise reducing element is finally picked from the second conveyor belt and positioned in a predetermined position on a radially inner surface of the tyre. The Applicant has verified that the invention described in WO2016/067192 allows achieving a high automation of the process of gluing the noise reducing elements to the tyres, thus obtaining an increase in the productivity of the lines dedicated to the production of tyres provided with noise reducing elements. The Applicant has also observed that, in order to adequately perform the noise attenuating function of the rolling tyre and to ensure that this occurs for as long as possible (hopefully equal to the useful life of the tyre), it is important both that the adhesive is uniformly distributed on the face of the noise reducing body, above all on its edges, and that the entire adhesive face of the noise reducing element is glued in a stable manner inside the tyre in a predetermined position in a circumferential and axial direction. This allows avoiding that the noise reducing element, once glued on the tyre, can move during the rolling of the tyre, causing unwanted abrasions due to friction with a consequent reduction in time of the noise attenuation effect.

In attempting to further improve the stability of the noise reducing elements on the tyre, the Applicant has selected adhesive materials having a greater adhesion after 24 hours of curing.

Following the use of these adhesive materials, the Applicant has observed some problems during detachment by tearing with consequent increase in waste and deterioration of the cycle time. The Applicant has further observed that the use of a blade or a hot wire to cut the tape of adhesive material, as suggested in WO2016/067192 for adhesive materials with very strong internal bonds, has led to obtaining irregular incisions due to the tolerances (+2\-1mm) on the length of noise reducing bodies. In some cases, the cut was out of phase with respect to the joint between two bodies, incising the bodies themselves and causing on the one hand an excess of adhesive and on the other a lack thereof.

The Applicant has perceived that the stable adhesion of the noise reducing elements and a limited number of scraps are primary objectives and that therefore it is necessary to promote the use of very tough adhesive materials, while maintaining the cycle times reduced so as not to affect productivity.

The Applicant has also perceived that a solution to the illustrated problems had to be found by pursuing the choice of a detachment by tearing, that is, in the absence of a real cutting action that would have directly interfered with the tape of adhesive material.

Finally, the Applicant has found that it is possible to avoid the problems listed above by safely and selectively heating the aforesaid strip of adhesive material to weaken it in the section to be torn without affecting its toughness in the remaining portion of the surface.

The present invention therefore relates, in a first aspect thereof, to a method for manufacturing noise reducing elements for a tyre for vehicle wheels according to claim 1.

The Applicant believes that a clear, uniform and precise tear is obtained by safely heating the passage portion. The noise reducing elements are not subjected to lateral deviations and/or movements and the cycle time is not deteriorated. It is thus possible to use high tenacity adhesive materials for a correct and lasting positioning.

In a second aspect thereof, the present invention relates to a unit for manufacturing noise reducing elements for a tyre for vehicle wheels according to claim 10.

The unit according to claim 10 allows the method according to claim 1 to be implemented.

The Applicant believes that the emitter of electromagnetic radiations in the infrared range is able to safely and reliably heat the passage portion to make a tear, without blades or moving elements, which does not affect the cycle time of the unit itself.

In a third aspect thereof, an embodiment of the present invention relates to a process for applying noise reducer elements to a tyre for vehicle wheels.

Preferably, an action a) is provided for manufacturing a plurality of noise reducing elements, in which each noise reducing element comprises a noise reducing body and a layer of adhesive material, applying a method for manufacturing noise reducing elements according to the first aspect.

Preferably, an action b) is provided for positioning each noise reducing element in a predetermined position on a radially inner surface of a tyre, bringing said layer of adhesive material into contact with said radially inner surface.

In a fourth aspect thereof, an embodiment of the present invention relates to an apparatus for applying noise reducer elements to a tyre for vehicle wheels.

Preferably, a unit for manufacturing noise reducing elements according to the above second aspect is provided.

Preferably, a main conveyor is provided for feeding the tyres. Preferably, a bonding manipulator of said noise reducing elements is provided, adapted to pick up a noise reducing element at a time from the outlet conveyor and to position it in a predetermined position on a radially inner surface of said tyre, bringing said layer of adhesive material into contact with said radially inner surface.

The present invention, in at least one of the above aspects thereof, can exhibit at least one of the features described below. Preferably, it is provided to modify, in synchronization with the advancement of the head precursor through the heating station, an intensity of the electromagnetic radiations to which said passage portion is exposed between a service value corresponding to the transit of said active head portion through said heating station, and a cutoff value corresponding to the transit of said passage portion through said heating station, said cutoff value being greater than the service value and it is such as to heat said passage portion.

Preferably, said control unit is programmed for modifying, in synchronization with the advancement of the head precursor through the heating station, an intensity of the electromagnetic radiations to which said passage zone is exposed between a service value corresponding to the transit of said active head portion through said heating station, and a cutoff value corresponding to the transit of said passage portion through said heating station greater than the service value and it is such as to heat said passage portion.

Preferably, the cutoff value of the intensity of the electromagnetic radiations is maintained for a first time interval corresponding to the transit interval of the passage portion through said heating station.

More preferably, the first time interval is between 1 s and 2 s, even more preferably it is equal to about 1.5 s.

Preferably, the service value of the intensity of the electromagnetic radiations is maintained for a second time interval corresponding to the transit interval of the active head portion through said heating station.

More preferably, the second time interval is between 3 and 5 s, even more preferably it is equal to about 3.5 s.

Preferably, said electromagnetic radiations in the infrared range are generated by an emitter of electromagnetic radiations in the infrared range arranged in a fixed position with respect to said feeding path.

The use of an emitter, for example an infrared lamp, is safe and reliable and allows an optimal synchrony with the passage of the head precursor.

Preferably, said electromagnetic radiations in the infrared range are generated through an emission opening of the emitter directed towards a passage area of said heating station. Preferably, said emission opening extends predominantly in a direction perpendicular to said feeding path by a length equal to at least a width of the tape of adhesive material.

More preferably, said emission opening extends along said feeding path by a stretch comprised between 3 mm and 7 mm, even more preferably of about 5 mm.

The presence of an emission opening extended perpendicularly to the feeding path by the entire stretch from the passage portion makes heating precise and fast.

Preferably, modifying the intensity of the electromagnetic radiations comprises modifying, in synchronization with the advancement of the head precursor through the heating station, an electrical supply power of the emitter between an electrical service power such as to generate electromagnetic radiations with an intensity equal to the service value and an electrical cutoff power such as to generate electromagnetic radiations with an intensity equal to the cutoff value.

Preferably, said control unit comprises a module for adjusting an electrical supply power of the emitter programmed to modify, in synchronization with the advancement of the head precursor through the heating station, said electrical supply power between an electrical service power such as to generate electromagnetic radiations with an intensity equal to a service value and an electrical cutoff power such as to generate electromagnetic radiations with intensity equal to the cutoff value.

Preferably, said electrical service power lower than or equal to 10% of a maximum electrical supply power of the emitter is kept for a first time interval corresponding to the transit interval of the passage portion through the heating station.

Preferably, said electrical cutoff power comprised between 90% and 100% of a maximum supply electrical power of the emitter is kept for a second time interval corresponding to the transit interval of the active head portion through the heating station. The use of high activation speed emitters allows the two steps of detachment of the passage portion and of transit of the active head portion to be controlled effectively by acting directly on the electrical source which supplies the emitter.

Preferably, a screen is provided, movable with respect to said emitter between an active position, wherein said screen is interposed between said emitter and said heating station, said active position being such as to expose the active head portion to electromagnetic radiations with intensity equal to the service value, and a passive position different from said active position and such as to expose the passage portion to electromagnetic radiations with intensity equal to the cutoff value, and wherein said control unit is programmed to change the position of said screen, in synchronization with the advancement of the head precursor through the heating station.

Preferably, modifying the intensity of electromagnetic radiations comprises modifying, in synchronization with the advancement of the head precursor through the heating station, a position of a screen with respect to said emitter between an active position, in which said screen is interposed between said emitter and a passage area of said heating station, said active position being such as to expose the active head portion to electromagnetic radiations with an intensity equal to the service value, and a passive position different from said active position and such to expose the passage portion to electromagnetic radiations with intensity equal to the cutoff value.

The use of a screen, in addition to or as an alternative to driving the electrical source, allows the two steps of detachment of the passage portion and of transit of the active head portion to be effectively managed.

Preferably, a plurality of noise reducing bodies are arranged in a row along an input path leading to said feeding path.

In order to achieve a substantially automatic unit, the noise reducing bodies are advantageously preliminarily positioned to then be transferred to the heating station.

Preferably, said plurality of precursors is advanced in an intermittent manner along the feeding path and said noise reducing bodies are pressed against said tape of adhesive material.

Preferably, a pressure member is provided, which is configured to press said noise reducing bodies against said service conveyor.

Preferably, the tape of adhesive material placed on a service conveyor is advanced along the feeding path.

Preferably, said service conveyor comprises a continuous film supporting said tape of adhesive material.

Preferably, said tape of adhesive material advances along the service conveyor coupled to a continuous film for supporting. Preferably, the head precursor is advanced along the feeding path from the service conveyor to an outlet conveyor located downstream of said service conveyor along the feeding path, said heating station comprising a passage area arranged between said service conveyor and said outlet conveyor. Preferably, exerting a pulling action on the head precursor comprises controlling, in synchronization with the advancement of the head precursor through the heating station, respective feeding speeds of said service conveyor and of said outlet conveyor so as to detach said head precursor from the remaining precursor by tearing said tape of adhesive material at the passage portion.

Preferably, controlling respective feeding speeds of said service conveyor and of said outlet conveyor comprises moving said outlet conveyor with respect to said service conveyor with a predetermined relative advancement speed greater than zero for at least one time interval included in the transit interval of the passage portion through said heating station.

Preferably, said control unit is programmed to control, in synchronization with the advancement of the head precursor through the heating station, adjustment devices of respective motor members of the service conveyor and of the outlet conveyor independently of one another.

Preferably, controlling respective feeding speeds of said service conveyor and of said outlet conveyor comprises controlling adjustment devices of respective motor members of the service conveyor and of the outlet conveyor independently of one another.

Preferably, a plurality of noise reducing bodies are placed in a row on an input conveyor movable along an input path leading to said feeding path, wherein said service conveyor is arranged downstream of said input conveyor along said input path and said feeding path.

Preferably, said plurality of noise reducing bodies is transferred from said input conveyor to said service conveyor placing them resting on said tape of adhesive material.

Preferably, an input station is provided defining an input path leading to the feeding path and configured for bringing a plurality of noise reducing bodies resting on said tape of adhesive material.

Preferably, said input station comprises one or more of an input conveyor configured for receiving said plurality of noise reducing bodies and for moving them along the input path and an input manipulator configured to pick up a noise reducing body at a time and deposit it resting on said tape of adhesive material. Preferably, actions a) and b) are repeated so as to cover with a plurality of noise reducing elements a predetermined portion of said radially inner surface of said tyre.

Further features and advantages of the present invention will appear more clearly from the following detailed description of preferred embodiments thereof, made with reference to the accompanying drawings.

In such drawings:
- figure 1 is a schematic view of a tyre production line and an apparatus for applying noise reducing elements to a tyre for vehicle wheels;
- figure 2 is a schematic perspective view of a noise reducing element;
- figure 3 is a schematic perspective and sectional view of a tyre to which noise reducing elements have been applied;
- figure 4 is a schematic top view of an apparatus for applying noise reducing elements to a tyre for vehicle wheels;
- figure 5 is a schematic lateral view of the apparatus of figure 4;
- figure 6 is a schematic view of an enlarged detail of figure 5;
- figure 7 is a schematic lateral view of a detail of figure 6;
- figure 8 is a schematic top view of the detail of figure 7.

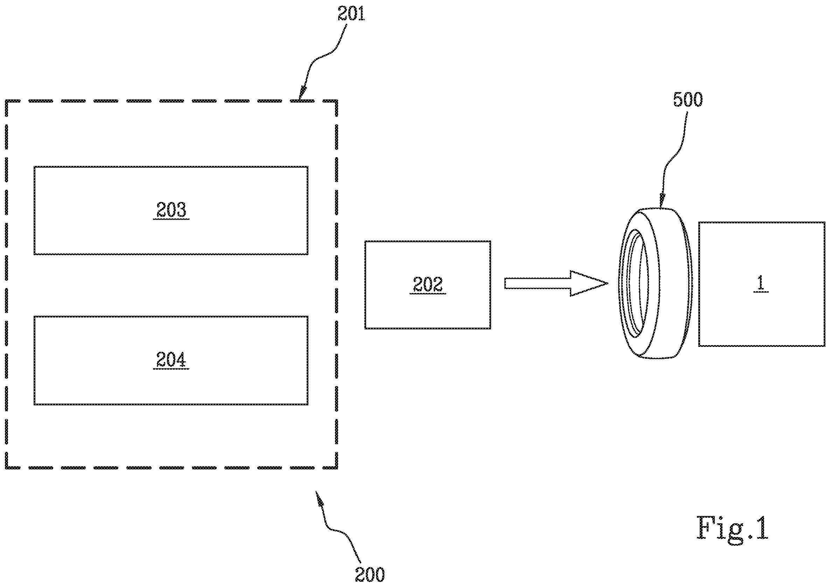

With reference for example to figures 1, 4 and 5, reference numeral 1 indicates as a whole a possible embodiment of an apparatus for applying noise reducing elements 100 to a tyre 500 for vehicle wheels. In particular, the apparatus 1 is configured to operate automatically.

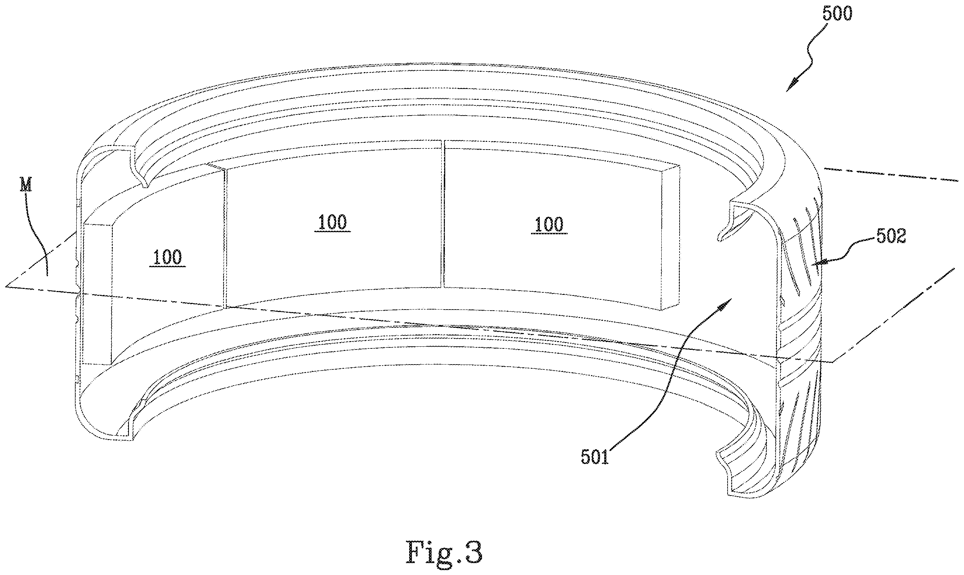

A noise reducing element 100 at a time is picked up and applied on a radially inner surface 501 of the tyre 500. The radially inner surface 501 is for example placed at a tread band 502 of the tyre 500 (figure 3).

The tyre 500 is preferably a tyre for four-wheeled vehicles, preferably for high-end cars.

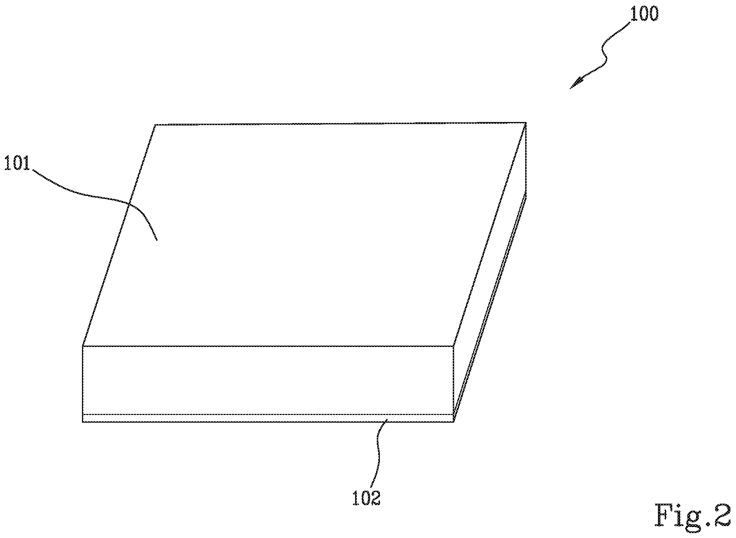

As illustrated for example in figure 2, each noise reducing element 100 comprises a noise reducing body 101 and a layer of adhesive material 102 which covers a surface of the noise reducing body and which allows the bonding of the noise reducing element 100 on the radially inner surface 501 of the tyre 500.

Nitto 5015T was used as an example of adhesive material.

The noise reducing elements 100 preferably have a tile like shape or rectangular parallelepiped. More preferably, they have a smaller side comprised between about 100 mm and about 250 mm, a greater side comprised between about 100 mm and about 300 mm and a thickness comprised between about 15 mm and about 50 mm. However, the possibility that the noise reducing elements 100 have different shapes and sizes indicated herein is not excluded.

As shown for example in figure 3, the noise reducing elements 100 are glued one after the other on the radially inner surface 501 of the tyre 500 along the circumferential direction of the latter, in a number which depends on the dimensions of the tyre itself. To glue the noise reducing elements, the layer of adhesive material 102 is placed in contact with the radially inner surface 501 of the tyre 500.

Preferably, the larger sides of the noise reducing elements 100 are arranged substantially parallel to the circumferential direction of the tyre 500. Even more preferably, the noise reducing elements 100 are arranged symmetrically with respect to an axial centre plane M of the tyre 500.

Preferably, the mutual positioning of the noise reducing elements 100 on the radially inner surface 501 of the tyre 100 is such as to leave a gap between two adjacent noise reducing elements 100, but the possibility of arranging the noise reducing elements 100 directly in mutual contact is not excluded.

Preferably, the circumferential extension of the radially inner surface portion 501 of the tyre 500 on which the noise reducing elements 100 are glued (hereinafter, reference will be made to this circumferential extension using the term "coating") is equal to at least 50% of the circumferential extension of the radially inner surface 501 of the tyre 500. Depending on the circumferential size of the tyre 100, the aforementioned coating may be for example between about 70% and about 90%, preferably between about 71% and about 85% of the circumferential extension of the radially inner surface 501 of the tyre 500. When the circumferential size of the tyre 500 varies, if necessary, noise reducing elements 100 of different length can be used to obtain the desired coating.

The noise reducing elements 100 are preferably made of porous sound-absorbent material, for example an expanded polymeric material, preferably open-cell polyurethane foam. However, the use of a different material that has similar capacity to reduce noise is not excluded.

The density of the noise reducing elements 100 is preferably between about 20 Kg/m³ and about 200 Kg/m³. In a specific embodiment, this density is approximately 30 kg/m³.

With reference for example to figure 1, the apparatus 1 is operatively placed downstream of a tyre production line 200 comprising a building plant 201 of green tyres and at least one moulding and vulcanisation unit 202 operatively arranged downstream of the building apparatus 201.

The building plant 201 may comprise, according to the example shown in figure 1, a carcass building line 203, at which forming drums, not shown, are moved between different delivery stations of semi-finished products arranged to form, on each forming drum, a carcass sleeve. At the same time, in an outer sleeve building line 204, one or more auxiliary drums, not shown, are sequentially moved between different work stations designed to form an outer sleeve on each auxiliary drum. The building plant 201 further comprises an assembling station, not shown, at which the outer sleeve is coupled to the carcass sleeve.

In other embodiments, not shown, the building plant 201 may be of a different type, for example arranged to build the green tyre on a single drum.

The green tyres are then transferred to the moulding and vulcanisation unit 202 to obtain moulded and vulcanised tyres 500 to which the noise reducing elements are subsequently applied.

The moulded and vulcanised tyres 500 may be moved, by means of suitable devices not shown, from the moulding and vulcanisation unit 202 directly towards the apparatus 1 structurally located downstream of the production line 200.

Alternatively, the moulded and vulcanised tyres 500 may be stored and subsequently transferred to the apparatus 1, for example arranged in a remote site with respect to the production line 200.

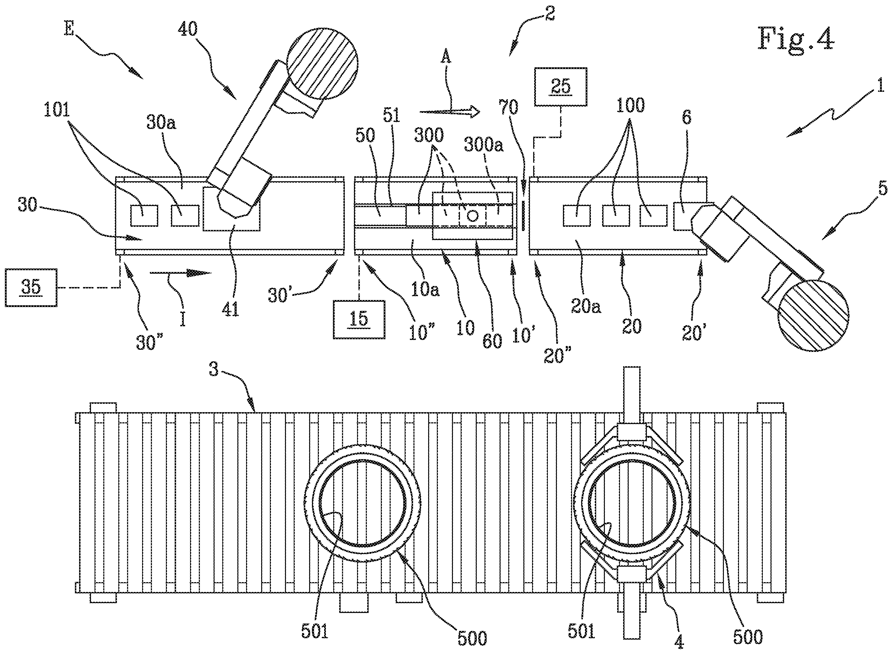

With reference, for example, to figures 4-6, the apparatus 1 comprises a unit for manufacturing noise reducing elements 100, designated by the reference numeral 2 and hereinafter referred to as unit 2.

The apparatus 1 comprises a main conveyor 3 for feeding the tyres 500 for example coming from the moulding and vulcanisation unit 202. The main conveyor 3 is preferably a conveyor belt or a roller conveyor.

The tyre 500 on which the noise reducing elements 100 are glued is held in position, during the gluing operations, by suitable retaining members 4. The retaining members 4 may for example be made by means of pliers, belts, wedges movable with respect to the main conveyor or other elements suitable for performing the above function.

The apparatus 1 comprises a bonding manipulator 5 adapted to pick up a noise reducing element at a time from the unit 2 and position it in a predetermined position on the radially inner surface 501 of the tyre 500, bringing the layer of adhesive material 102 into contact with the radially inner surface 501. Preferably, the bonding manipulator 5 is made by a robotic arm, preferably of an aerial type (i.e. associated with the ceiling or with an aerial crosspiece) so as not to create encumbrance on the ground. It is however possible to use as an alternative a robotic arm constrained to the ground. More preferably, the robotic arm is an anthropomorphic robotic arm with at least six rotation axes.

The bonding manipulator comprises a gripping member 6 suitable for picking up the noise reducing elements 100 from the unit 2 and holding them in position during the movement of the manipulator towards the tyre 500. The gripping member 6 may be a suction gripping device comprising one or more suction channels (not shown) fluid-dynamically connected to a selectively activatable suction device for retaining/releasing the noise reducing element 100 by suction. In addition or as an alternative, the gripping member 6 may be a mechanical gripping member comprising mechanical gripping/release components, for example grippers.

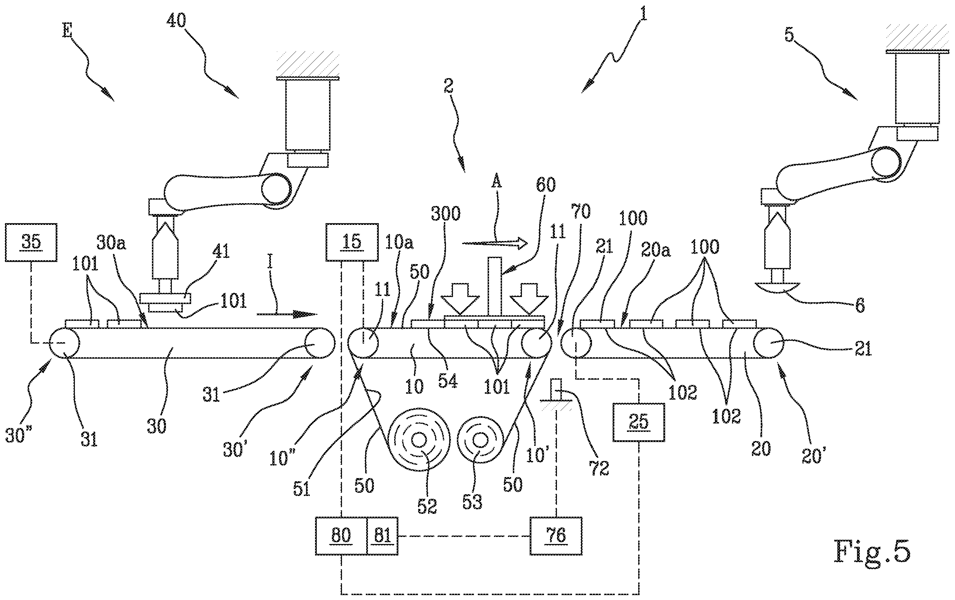

With reference for example to figures 4-6, the unit 2 comprises a service conveyor 10 which can be moved along a feeding path "A" which extends in a direction illustrated in figures 4 and 5. With respect to the direction of the feeding path "A", the service conveyor 10 has a head end portion 10' and a tail end portion 10". Moreover, the service conveyor 10 also has an upper surface 10a. The service conveyor 10 is preferably made by a conveyor belt wound on pulleys 11 of which at least one is motorized.

An outlet conveyor 20 is arranged downstream of the service conveyor 10, which can also be moved along the feeding path "A" and preferably made of non-stick material, for example made anti-adhesive by a surface treatment with silicones. With respect to the direction of the feeding path "A", the outlet conveyor 20 has a head end portion 20' and a tail end portion 20". The outlet conveyor 20 also has an upper surface 20a. The outlet conveyor 20 is preferably made by a conveyor belt wound on pulleys 21 of which at least one is motorized.

Preferably, upstream of the service conveyor 10 there is an input station "E" defining an input path "I" leading into the feeding path "A".

For example, the input station "E" comprises an input conveyor 30, which can be moved along the input path "I" which develops in a direction illustrated in figures 4 and 5. Preferably, the input path "I" is aligned with the feeding path "A". With respect to the direction of the input path "I", the input conveyor 30 has a head end portion 30' and a tail end portion 30". The input conveyor 30 also has an upper surface 30a. The input conveyor 30 is preferably made by a conveyor belt wound on pulleys 31 of which at least one is motorized.

Preferably, the input station "E" may also comprise a transfer manipulator 40 movable between a gripping position defined at the input conveyor 30 (figures 4 and 5) and a release position defined at the service conveyor 10 (not shown).

Preferably, the transfer manipulator 40 is made by a robotic arm, preferably of an aerial type (i.e. associated with the ceiling or with an aerial crosspiece) so as not to create encumbrance on the ground. It is however possible to use as an alternative a robotic arm constrained to the ground. More preferably, the robotic arm is an anthropomorphic robotic arm with at least six rotation axes.

The transfer manipulator 40 comprises a gripping member 41 suitable for picking up the noise reducing bodies 101 from the input conveyor 30 and holding them in position during the movement of the manipulator towards the service conveyor 10.

The gripping member 41 may be made as the gripping member of the bonding manipulator 5.

According to a possible embodiment, the input station "E" may comprise only the transfer manipulator 40 operating between a store of noise reducing bodies 101 and the service conveyor 10. The input conveyor 30, the service conveyor 10 and the outlet conveyor 20 are preferably aligned and arranged in succession along the input path "I" and the feeding path "A", in particular at the respective upper surfaces 10a, 20a, 30a.

The service conveyor 10, the outlet conveyor 20 and the input conveyor 30 can be moved along the respective paths on command of respective motor members, for example of an electrical type.

Each of the aforesaid motor members is associated with a respective adjustment device 15, 25, 35 of the advancement speed of the respective conveyor, for example implemented by means of a PLC or similar control means. These adjustment devices 15, 25, 35 selectively act on the respective motor members independently of one another so as to be able to move, when desired, a conveyor independently of the others. In particular, it is contemplated to be able to move the outlet conveyor 20 at a different speed, preferably greater than that of the service conveyor 10.

The input conveyor 30 is configured to receive a plurality of noise reducing bodies 101 and to move them along the input path "I".

As will be described in more detail below, when the noise reducing bodies 101 are on the input conveyor 30 and move to the service conveyor 10, they are free of adhesive material.

The service conveyor 10 is configured to receive a tape of adhesive material 50 on the upper surface 10a thereof and make it advance along the feeding path "A". The tape of adhesive material 50 is preferably a pressure sensitive adhesive. Preferably, the tape of adhesive material 50 is initially associated with a face of a continuous film 51 specifically connected to the service conveyor 10. The continuous film 51 therefore acts as a support for the tape of adhesive material 50.

The continuous film 51 is unwound from an unwinding reel 52 preferably located under the service conveyor 10 at the tail end portion 10" of the latter and, following the unwinding from the unwinding reel 52, it is collected on a winding reel 53 preferably located under the service conveyor 10 at the head end portion 10' of the latter. The continuous film 51 extends from the unwinding reel 52 to the winding reel 53 passing over the upper surface 10a of the service conveyor 10.

The continuous film 51 is preferably made of a non-stick material (for example paper or polymeric material such as polyethylene PE, polypropylene PP or polyethylene terephthalate PET, superficially treated with silicones). The material of the continuous film 51 is such that the adhesion force of the tape of adhesive material 50 on the continuous film 51 is considerably lower than that of adhesion of the tape of adhesive material 50 on the lower face of the noise reducing bodies 101.

The continuous film 51 has a width equal to or greater than that of the noise reducing bodies 101. Preferably, any difference in width between the continuous film 51 and the noise reducing bodies 101 is not greater than about 2mm.

The continuous film 51 preferably has a thickness (including the tape of adhesive material 50) of between 30 µm and 150 µm, for example equal to about 80 µm.

The service conveyor 10 is further configured to receive, resting on the tape of adhesive material 50, the noise reducing bodies 101 coming from the input station "E", preferably arranged in a row and in close proximity to each other.

Preferably, above the service conveyor 10 there is a pressure member 60, movable preferably along a substantially vertical direction, between an operating position, proximal to the upper surface 10a of the service conveyor 10, and a rest position, distal to the upper surface 10a of the service conveyor 10. The pressure member 60 may be implemented by a plate associated with a linear actuator, for example a pneumatic or hydraulic piston, by a cam element or by an expandable body or other components adapted to carry out the above purpose. In the aforesaid operating position, the pressure member 60 presses one or more noise reducing bodies 101 against the service conveyor 10 so as to cause each of these noise reducing bodies 101 to adhere integrally to a respective active portion 54 of the tape of adhesive material 50. In the above rest position, the pressure member 60 is moved away from the above noise reducing bodies 101 and therefore does not exert any action thereon.

Preferably, the pressure member 60 is arranged at the head end portion 10' of the service conveyor 10.

Alternatively or in addition to the pressure member 60, the desired pressure of the noise reducing bodies 101 on the service conveyor 10 can be obtained by the effect of the thrust exerted by the transfer manipulator 40 at the moment in which it places the noise reducing bodies 101 on the service conveyor 10.

The noise reducing bodies 101 connected to the tape of adhesive material 50 define a plurality of precursors 300, 300a of the noise reducing elements 100.

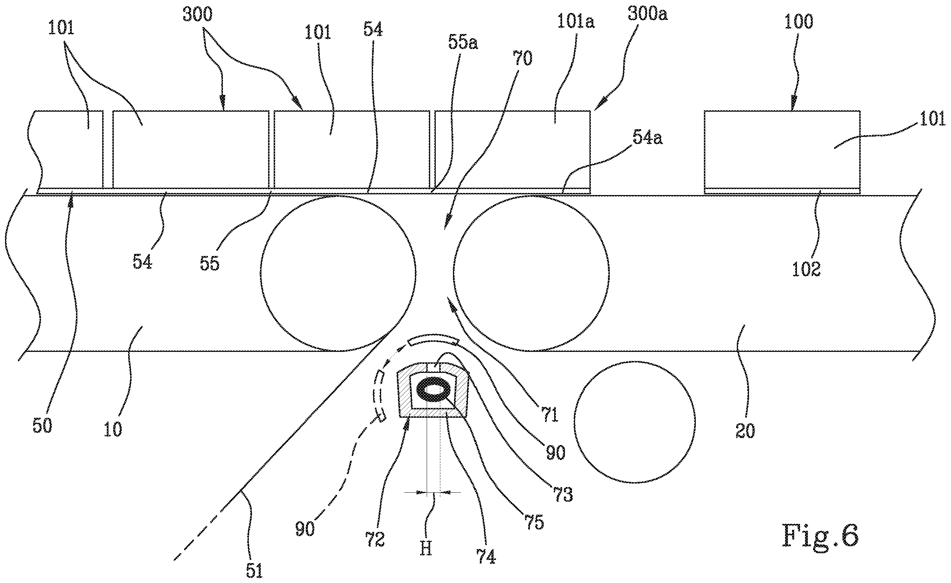

With reference to figure 6, 300a indicates a head precursor, that is, the first precursor of the plurality of precursors according to the direction of the feeding path "A".

The head precursor 300a is formed by a head noise reducing body 101a adhered to an active head portion 54a of the tape of adhesive material 50.

Reference numeral 300 indicates a precursor of the above plurality of precursors, arranged upstream of the head precursor 300a along the direction of the feeding path "A". Each precursor 300 is formed by a noise reducing body 101 attached to a respective active portion 54 of the tape of adhesive material 50. The tape of adhesive material 50 extends continuously between the plurality of precursors 300, 300a so that two active portions 54 of two adjacent noise reducing bodies 101 are joined by a passage portion 55 of the tape of adhesive material where the active portion 54a at the end of the tape of adhesive material 50 is joined to the remaining active portions 54 by means of a passage portion which herein and in the following are indicated with reference numeral 55a. Figure 6 illustrates a detail of the passage area between the service conveyor 10 and the outlet conveyor 20 in which the proportions between the dimensions of the noise reducing bodies, the tape of adhesive material and the respective active and passage portions have been adapted to facilitate understanding.

The passage of the head precursor 300a from the service conveyor 10 to the outlet conveyor 20 takes place due to the movement of the service conveyor 10 along the feeding path "A".

Reference numeral 70 indicates a heating station located along the feeding path "A". The heating station 70 comprises a passage area 71 arranged between the service conveyor 10 and an outlet conveyor 20. Preferably, the passage area 71 has a length, parallel to the direction of the feeding path, comprised between 10 and 20 mm, preferably equal to 15 mm.

The head precursor 300a passes through the passage area 71 as will be described below.

The heating station 70 comprises an emitter 72 of electromagnetic radiations in the infrared range, hereinafter referred to as emitter 72, arranged in a fixed position with respect to the feeding path "A" and therefore with respect to the service conveyor 10 and to the outlet conveyor 20. For example, the emitter 72 is arranged at about 60mm from the feeding path "A".

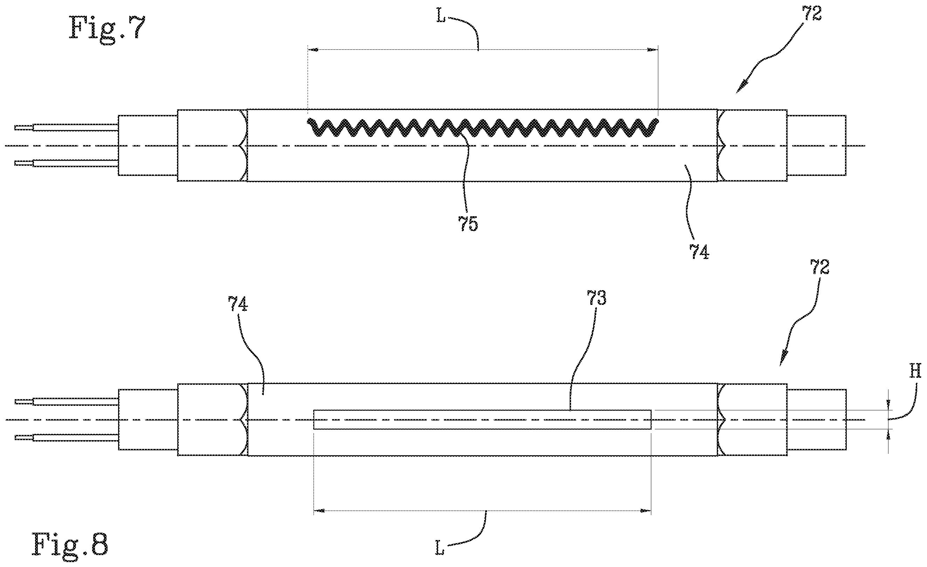

The emitter 72 has an emission opening 73 facing the passage area. Preferably, the emission opening 73 has a prevalent extension perpendicular to the feeding path "A". For example, the emission opening 73 extends along the feeding path "A" by a stretch "H" between 3 mm and 7 mm, preferably 5 mm, and perpendicularly to the feeding path "A" by a stretch "L" at least equal to a width of the tape of adhesive material 50, for example between 100 mm and 170 mm, more preferably between 120 mm and 150 mm (figures 7-8).

As shown for example in figures 7-8, the emitter 72 preferably has a body 74. The emission opening 73 is for example implemented by shielding the body 74 with the exception of the area defining the emission opening 73.

As shown for example in figure 7, inside the body 74 a filament 75 is inserted, connected to an electrical source 76 adapted to generate an electrical supply power of the emitter 72. In this embodiment, the emitter 72 is also defined as an infrared lamp and for example can reach a temperature of about 225 °C at the filament 75.

The electrical source 76 is adapted to supply a maximum electrical supply power of the emitter 70 which is suitably adjustable between an electrical service power and an electrical cutoff power, as will be described below.

For example, with reference to figure 5, reference numeral 80 indicates a control unit of the unit 2 the functions whereof will be described below.

A preferred embodiment of a method for manufacturing noise reducing elements 100 is now described. This is in particular a method that can be implemented by the unit 2 described above. Initially, as illustrated in figures 4 and 5, the noise reducing bodies 101 are sequentially positioned on the input conveyor 30, which is moved with a predetermined speed along the input path "I".

This movement takes place sequentially and alternately with respect to the positioning of the noise reducing bodies 101 on the input conveyor 30, each time with a feeding step of predetermined length.

The positioning of the noise reducing bodies 101 on the input conveyor 30 can be carried out by the input manipulator 40 or by a further manipulator (not shown) or manually by an operator, picking the noise reducing bodies 101 from a suitable collection tank near the input conveyor 30. Alternatively, the noise reducing bodies 101 can be obtained by cutting them from a plate positioned in the proximity of the input conveyor 30.

The passage of the noise reducing bodies 101 from the input conveyor 30 to the service conveyor 10 takes place preferably due to the movement of the input conveyor 30 along the input path "I".

Alternatively, the noise reducing bodies 101 are sequentially picked up by the gripping member 41 of the input manipulator 40 and moved onto the service conveyor 10, motorized with a predetermined speed along the feeding path "A".

In the embodiment illustrated herein, the noise reducing bodies 101 are arranged on the service conveyor 10 substantially in mutual contact.

The positioning of the noise reducing bodies 101 on the service conveyor 10 and on the tape of adhesive material 50 takes place sequentially each time following the intermittent movement of the service conveyor 10 along the feeding path "A" with a step of advancement of fixed length. This movement causes the unwinding of a longitudinal portion of the continuous film 51 from the unwinding reel 52 and the winding of a corresponding longitudinal portion of the continuous film 51, substantially devoid of adhesive material 50, on the winding reel 53.

The noise reducing bodies 101 are pressed against the upper surface 10a of the service conveyor 10 so that they can firmly adhere to the tape of adhesive material 50 associated with the continuous film 51. This pressure can be exerted by the input manipulator 40 and/or by the pressure member 60 arranged above the service conveyor 10.

In this way, a plurality of noise reducing bodies 101 arranged in a row and in close proximity to each other are arranged to rest on the tape of adhesive material 50, advancing along the feeding path "A" obtaining the above precursors 300, 300a.

Thereafter, the head precursor 300a is transferred from the service conveyor 10 to the outlet conveyor 20 due to the movement of the service conveyor 10 along the feeding path "A". In the above transfer, the active head portion 54a of the tape of adhesive material 50 associated with the lower face of the head reducing body 101a remains integral therewith. The portion of continuous film 51 wound on the winding reel 53 is substantially devoid of the tape of adhesive material 50. In particular, it comprises a minimum quantity of adhesive material, corresponding to the adhesive material present in the spaces defined between two adjacent noise reducing bodies 101 arranged on the service conveyor 10.

During the transfer from the service conveyor 10 to the outlet conveyor 20, the outlet conveyor 20 is also moved sequentially along the feeding path "A" intermittently, that is, with predefined advancement steps.

The respective advancement speeds of the service conveyor 10 and of the outlet conveyor 20 are controlled, in synchronization with the advancement of the head precursor 300a through the heating station 70, so as to detach the head precursor 300a from the remaining precursors 300 tearing the tape of adhesive material 50 at the passage portion 55a.

Preferably, the relative advancement speed of the outlet conveyor 20 with respect to the service conveyor 10 is greater than zero for at least a time interval comprised in the transit interval of the passage portion 55a through the heating station 70. In other words, in the same time interval, the movement speed of the outlet conveyor 20 is greater than that of the service conveyor 10, so as to exert a pulling action on the head precursor 300a, away from the remaining precursors 300, up to tearing the tape of adhesive material 50 at the passage portion 55a and obtaining a noise reducing element 100 in which the layer of adhesive material 102 is formed by the relative active portion of the tape of adhesive material.

Furthermore, a reciprocal spacing of the noise reducing elements 100 comprised between 3 mm and 5 mm is obtained on the outlet conveyor.

The correct tearing of the passage portion 55a is obtained thanks to the heating operated by passing the head precursor 300a through the heating station 70 where it is exposed to electromagnetic radiations in the infrared range.

More in detail, the intensity of the electromagnetic radiations to which the head precursor 300a is exposed is modified during its advancement along the feeding path "A" between a service value and a cutoff value, greater than the service value, in synchronization with the advancement of the head precursor 300a through the heating station 70.

The cutoff value of the intensity of the electromagnetic radiations is maintained for a first time interval corresponding to the transit interval of the passage portion 55a through the heating station 70. This first time interval is equal to about 1.5 s. The cutoff value of the intensity of electromagnetic radiations is such as to heat the passage portion 55a preferably subjecting it to a temperature ranging from 50 °C to 70 °C, preferably equal to about 60 °C.

The service value of the intensity of the electromagnetic radiations is maintained for a second time interval corresponding to the transit interval of the active head portion 54a through the heating station. This second time interval is approximately 3.5 seconds. The service value of the intensity of electromagnetic radiations is such as not to modify the features of the adhesive material at the active head portion 54a.

To modify the intensity of the electromagnetic radiations it is preferable to intervene on the electrical source 76 and therefore on the electrical supply power of the emitter 72, modifying it between an electrical service power, applied for the second time interval and such as to generate electromagnetic radiations with intensity equal to the service value, and an electrical cutoff power, applied for the first time interval and such as to generate electromagnetic radiations with intensity equal to the cutoff value.

Preferably, the electrical service power is less than or equal to 10% of the maximum electrical supply power that can be supplied by the electrical source 76 and the electrical cutoff power is between 90% and 100% of the maximum electrical supply power.

The emitter 72 emits infrared radiations when the unit 2 is set in automatic mode, remaining at 10% of its maximum power for the second time interval, which corresponds to the passage of the active head portion 54a into the heating station 70, developing for example a temperature of 40 °C-45 °C. Subsequently the emitter 72 will be driven at 90-100% of its maximum power for the first time interval, which corresponds to the passage of the passage portion 55a in the heating station 70. The control unit 80 is programmed to modify the intensity of the electromagnetic radiations to which the passage area 71 is exposed between the service value and the cutoff value. Preferably, the control unit 2 comprises an adjustment module 81 of the electrical supply power of the emitter 72, programmed to control the electrical source 76 so as to modify the electrical supply power between the electrical service power and the electrical cutoff power.

The control unit 80 is also programmed to control respective advancement speeds of the service conveyor 10 and of the outlet conveyor 20 so as to exert the pulling action on the head precursor 300a and detach it from the remaining precursors 300, tearing the tape of adhesive material 50 at the passage portion 55a. In particular, the control unit 80 is programmed to control adjustment devices 15, 25 of the respective motor members of the service conveyor 10 and of the outlet conveyor 20 independently of each other. Preferably, this control provides for moving the outlet conveyor 20 with respect to the service conveyor 10 with a predetermined relative advancement speed greater than zero to operate the detachment of the head precursor 300a.

According to a possible embodiment, for example illustrated in figure 6, the unit 2 may comprise a screen 90 movable with respect to the emitter 72 between an active position, shown with a continuous line, and a passive position different from the active position, illustrated with a dotted line. In the active position the screen 90 is interposed between the emitter 72 and the heating station 70 so that the active head portion 54a in transit through the passage area 71 is subjected to electromagnetic radiations with an intensity equal to the service value. In the passive position, the screen 90 is arranged outside the area of interaction between the emitter and the passage area 71 so that the passage portion 55a is subjected to electromagnetic radiations with an intensity equal to the cutoff value. In this case the control unit 80 is programmed to modify the position of the screen 90 in synchronization with the passage of the active head portion 54a and of the passage portion 55a. The presence and movement of the screen 90 can be provided in addition to or as an alternative to the adjustment of the electrical supply power of the emitter 72.

The noise reducing elements 100 arranged on the outlet conveyor 20 by the unit 2 are subsequently withdrawn in sequence to be transferred towards the tyre 500, positioned and then bonded at respective predetermined positions on the radially inner surface 501 of the latter. This withdrawal and transfer is carried out by the gripping member 6 of the bonding manipulator 5.

The above operations for gripping the noise reducing element 100 from the outlet conveyor 20 and bonding on the radially inner surface 501 of the tyre 500 are repeated sequentially for a plurality of noise reducing elements 100 until they reach the desired coating of the radially inner surface 501 of the tyre 500.

## Claims

1. Method for manufacturing noise reducing elements (100) for a tyre (500) for vehicle wheels, comprising:
- providing a plurality of precursors (300, 300a) of noise reducing elements (100) each formed by a noise reducing body (101, 101a) adhering to a respective active portion (54, 54a) of a tape of adhesive material (50), wherein two active portions (54, 54a) of two consecutive precursors (300, 300a) are joined by a passage portion (55, 55a) of the tape of adhesive material (50);
- passing said two consecutive precursors (300, 300a) joined by said passage portion (55a) through a heating station (70) of a feeding path (A);
- exposing said passage portion (55a) in transit in the heating station (70) to electromagnetic radiations in the infrared range such as to heat said passage portion (55a);
- exerting a pulling action on a head precursor (300a) of said two precursors (300, 300a), away from the remaining precursor (300), until said tape of adhesive material (50) is torn at said passage portion (55a) heated and obtain a noise reducing element (100) in which a layer of adhesive material (102) is made by an active head portion (54a) detached from the remaining active portion (54).

2. Method for manufacturing noise reducing elements (100) according to claim 1, comprising modifying, in synchronization with the advancement of the head precursor (300a) through the heating station (70), an intensity of the electromagnetic radiations to which said passage portion (55a) is exposed between a service value corresponding to the transit of said active head portion (54a) through said heating station (70), and a cutoff value corresponding to the transit of said passage portion (55a) through said heating station (70), said cutoff value being greater than the service value and it is such as to heat said passage portion (55a).

3. Method for manufacturing noise reducing elements (100) according to one or more of the preceding claims, wherein said electromagnetic radiations in the infrared range are generated by an emitter (72) of electromagnetic radiations in the infrared range arranged in a fixed position with respect to said feeding path (A).

4. Method for manufacturing noise reducing elements (100) according to claim 3, wherein modifying the intensity of electromagnetic radiations comprises modifying, in synchronization with the advancement of the head precursor (300a) through the heating station (70) an electrical supply power of the emitter (72) between an electrical service power such as to generate electromagnetic radiations having an intensity equal to a service value corresponding to the transit of said active head portion (54a) through said heating station (70), and an electrical cutoff power such as to generate electromagnetic radiations with intensity equal to a cutoff value corresponding to the transit of said passage portion (55a) through said heating station (70), greater than the service value and such to heat said passage portion (55a).

5. Method for manufacturing noise reducing elements (100) according to claim 3, wherein modifying the intensity of electromagnetic radiations comprises modifying, in synchronization with the advancement of the head precursor (300a) through the heating station (70), a position of a screen (90) with respect to said emitter (72) between an active position, wherein said screen (90) is interposed between said emitter (72) and a passage zone (71) of said heating station (70), said active position being such as to expose the active head portion (54a) to electromagnetic radiations with intensity equal to a service value corresponding to the transit of said active head portion (54a) through said heating station (70), and a passive position different from said active position and such as to expose the passage portion (55a) to electromagnetic radiations with intensity equal to a cutoff value corresponding to the transit of said passage portion (55a) through said heating station (70), greater than the service value and such as to heat said passage portion (55a).

6. Method for manufacturing noise reducing elements (100) according to one or more of the preceding claims, comprising advancing said plurality of precursors (300, 300a) intermittently along the feeding path (A) and pressing said noise reducing bodies (101) against said tape of adhesive material (50).

7. Method for manufacturing noise reducing elements (100) according to one or more of the preceding claims, comprising advancing along the feeding path (A) the tape of adhesive material (50) arranged resting on a service conveyor (10).

8. Method for manufacturing noise reducing elements (100) according to claim 7, comprising advancing the head precursor (300a) along the feeding path (A) from the service conveyor (10) to an outlet conveyor (20) located downstream of said service conveyor (10) along the feeding path (A), said heating station (70) comprising a passage area (71) arranged between said service conveyor (10) and said outlet conveyor (20), wherein exerting a pulling action on the head precursor (300a) comprises controlling, in synchronization with the advancement of the head precursor (300a) through the heating station (70), respective feeding speeds of said service conveyor (10) and of said outlet conveyor (20) so as to detach said head precursor (300a) from the remaining precursor (300) by tearing said tape of adhesive material (50) at the passage portion (55a).

9. Process for applying noise reducing elements (100) to a tyre (500) for vehicle wheels, comprising:
a) manufacturing a plurality of noise reducing elements (100), in which each noise reducing element comprises a noise reducing body (101) and a layer of adhesive material (102), applying a method for manufacturing noise reducing elements (100) according to one or more of the preceding claims;
b) positioning each noise reducing element (100) in a predetermined position on a radially inner surface (501) of a tyre (500), bringing said layer of adhesive material (102) into contact with said radially inner surface (501).

10. Unit (2) for manufacturing noise reducing elements (100) for a tyre (500) for vehicle wheels, wherein said unit (2) comprises:
- a service conveyor (10) configured for receiving a plurality of precursors (300, 300a) of noise reducing elements, each formed by a noise reducing body (101, 101a) adhering to a respective active portion (54, 54a) of a tape of adhesive material (50), wherein two active portions (54, 54a) of two consecutive precursors (300, 300a) are joined by a passage portion (55, 55a) of the tape of adhesive material (50), said service conveyor (10) being configured for advancing said precursors (300, 300a) along a feeding path (A);
- an outlet conveyor (20) located downstream of said service conveyor (10) along the feeding path (A);
**characterized in that** it comprises:
- a heating station (70) comprising a passage zone (71) disposed between said service conveyor (10) and said outlet conveyor (20) adapted for the transit of two consecutive precursors (300, 300a) joined by said passage portion (55a);
- an emitter (72) of electromagnetic radiations in the infrared range, arranged in a fixed position with respect to said service conveyor (10) and to said outlet conveyor (20) and having an emission opening (73) facing said passage zone (71), adapted to heat said passage portion (55a);
- a control unit (80) programmed to control, in synchronization with the advancement of a head precursor (300a) of said two precursors (300, 300a) through the heating station (70), respective feeding speeds of said service conveyor (10) and of said outlet conveyor (20) so as to detach said head precursor (300a) from a remaining precursor (300) of said two precursors (300, 300a) by tearing said tape of adhesive material (50) at the heated passage portion (55a).

11. Unit for manufacturing noise reducing elements (100) according to claim 10, wherein said control unit (80) is programmed for modifying, in synchronization with the advancement of the head precursor (300a) through the heating station (70), an intensity of the electromagnetic radiations to which said passage zone (71) is exposed between a service value corresponding to the transit of said active head portion (54a) through said heating station (70), and a cutoff value corresponding to the transit of said passage portion (55a) through said heating station (70) greater than the service value is such as to heat said passage portion (55a).

12. Unit for manufacturing noise reducing elements (100) according to claim 10 or 11, wherein said emission opening (73) extends predominantly in a direction perpendicular to said feeding path (A) by a length (L) equal to at least a width of the tape of adhesive material (50).

13. Unit for manufacturing noise reducing elements (100) according to one or more of claims 10 to 12, wherein said control unit (80) comprises a module (81) for adjusting an electrical supply power of the emitter (72) programmed to modify, in synchronization with the advancement of the head precursor (300a) through the heating station (70), said electrical supply power between an electrical service power such as to generate electromagnetic radiations with an intensity equal to a service value corresponding to the transit of said active head portion (54a) through said heating station (70), and an electrical cutoff power such as to generate electromagnetic radiations with intensity equal to a cutoff value corresponding to the passage of said passage portion (55a) through said heating station (70), greater than the service value and such as to heat said passage portion (55a).

14. Unit for manufacturing noise reducing elements (100) according to one or more of claims 10 to 12, comprising a screen (90) movable with respect to said emitter (72) between an active position, wherein said screen (90) is interposed between said emitter (72) and said heating station (70), said active position being such as to expose the active head portion (54a) to electromagnetic radiations with intensity equal to a service value corresponding to the transit of said active head portion (54a) through said heating station (70), and a passive position different from said active position and such as to expose the passage portion (55a) to electromagnetic radiations with intensity equal to a cutoff value corresponding to the transit of said passage portion (55a) through said heating station (70), greater than the service value and such as to heat said passage portion (55a), and wherein said control unit (80) is programmed to change the position of said screen (90), in synchronization with the advancement of the precursor (300a) through the heating station (70).

15. Apparatus (1) for applying noise reducing elements (100) to a tyre (500) for vehicle wheels, comprising:
- a unit (2) for manufacturing noise reducing elements (100) according to one or more of claims 10 to 14;
- a main conveyor (3) for feeding the tyres (500);
- a bonding manipulator (5) of said noise reducing elements (100) adapted to pick up a noise reducing element at a time from the outlet conveyor (20) and position it in a predetermined position on a radially inner surface (501) of said tyre (500), bringing a layer of adhesive material (102) into contact with said radially inner surface (501).

## Patentansprüche

1. Verfahren zur Herstellung geräuschmindernder Elemente (100) für einen Reifen (500) für Fahrzeugräder, umfassend:
- Bereitstellen einer Mehrzahl von Vorprodukten (300, 300a) geräuschmindernder Elemente (100), die jeweils durch einen geräuschmindernden Körper (101, 101a) ausgebildet sind, der an einem jeweiligen aktiven Abschnitt (54, 54a) eines Bandes klebenden Materials (50) haftet, wobei zwei aktive Abschnitte (54, 54a) zweier aufeinanderfolgender Vorprodukte (300, 300a) durch einen Übergangsabschnitt (55, 55a) des Bandes klebenden Materials (50) verbunden sind;
- Durchführen der zwei aufeinanderfolgenden Vorprodukte (300, 300a), die durch den Übergangsabschnitt (55a) verbunden sind, durch eine Heizstation (70) eines Zuführwegs (A);
- Aussetzen des Übergangsabschnitts (55a), der in der Heizstation (70) unterwegs ist, gegenüber elektromagnetischen Strahlungen im Infrarotbereich, um den Übergangsabschnitt (55a) zu erwärmen;
- Anwenden einer Zugaktion auf ein Kopfvorprodukt (300a) der zwei Vorprodukte (300, 300a) entfernt vom restlichen Vorprodukt (300), bis das Band klebenden Materials (50) am erwärmten Übergangsbereich (55a) reißt, und Erhalten eines geräuschmindernden Elements (100), in dem eine Schicht klebenden Materials (102) durch einen aktiven Kopfabschnitt (54a) hergestellt ist, der vom restlichen aktiven Abschnitt (54) getrennt ist.

2. Verfahren zur Herstellung geräuschmindernder Elemente (100) nach Anspruch 1, umfassend ein Modifizieren einer Intensität der elektromagnetischen Strahlungen, denen der Übergangsabschnitt (55a) ausgesetzt wird, synchron zum Vorrücken des Kopfvorprodukts (300a) durch die Heizstation (70) zwischen einem Betriebswert, der dem Durchgang des aktiven Kopfabschnitts (54a) durch die Heizstation (70) entspricht, und einem Grenzwert, der dem Durchgang des Übergangsabschnitts (55a) durch die Heizstation (70) entspricht, wobei der Grenzwert größer als der Betriebswert und so ist, dass er den Übergangsabschnitt (55a) erwärmt.

3. Verfahren zur Herstellung geräuschmindernder Elemente (100) nach einem oder mehreren der vorhergehenden Ansprüche, wobei die elektromagnetischen Strahlungen im Infrarotbereich durch einen Emitter (72) elektromagnetischer Strahlungen im Infrarotbereich erzeugt werden, der in einer festen Position in Bezug auf den Zuführweg (A) angeordnet ist.

4. Verfahren zur Herstellung geräuschmindernder Elemente (100) nach Anspruch 3, wobei das Modifizieren der Intensität von elektromagnetischen Strahlungen synchron zum Vorrücken des Kopfvorprodukts (300a) durch die Heizstation (70) ein Modifizieren einer elektrischen Versorgungsleistung des Emitters (72) zwischen einer elektrischen Betriebsleistung zum Erzeugen elektromagnetischer Strahlungen mit einer Intensität gleich einem Betriebswert, der dem Durchgang des aktiven Kopfabschnitts (54a) durch die Heizstation (70) entspricht, und einer elektrischen Grenzleistung zum Erzeugen elektromagnetischer Strahlungen mit einer Intensität gleich einem Grenzwert, der dem Durchgang des Übergangsabschnitts (55a) durch die Heizstation (70) entspricht und der größer als der Betriebswert und so ist, dass er den Übergangsabschnitt (55a) erwärmt.

5. Verfahren zur Herstellung geräuschmindernder Elemente (100) nach Anspruch 3, wobei das Modifizieren der Intensität von elektromagnetischen Strahlungen synchron zum Vorrücken des Kopfvorprodukts (300a) durch die Heizstation (70) ein Modifizieren einer Position eines Bildschirms (90) in Bezug auf den Emitter (72) zwischen einer aktiven Position, in der der Bildschirm (90) zwischen den Emitter (72) und eine Durchgangszone (71) der Heizstation (70) eingefügt ist, wobei die aktive Position so ist, dass der aktive Kopfabschnitt (54a) elektromagnetischen Strahlungen mit einer Intensität gleich einem Betriebswert ausgesetzt wird, der dem Durchgang des aktiven Kopfabschnitts (54a) durch die Heizstation (70) entspricht, und einer passiven Position, die von der aktiven Position verschieden und so ist, dass der Übergangsabschnitts (55a) elektromagnetischen Strahlungen mit einer Intensität gleich einem Grenzwert ausgesetzt wird, der dem Durchgang des Übergangsabschnitts (55a) durch die Heizstation (70) entspricht und der größer als der Betriebswert und so ist, dass er den Übergangsabschnitt (55a) erwärmt.

6. Verfahren zur Herstellung geräuschmindernder Elemente (100) nach einem oder mehreren der vorhergehenden Ansprüche, umfassend ein periodisches Vorwärtsbewegen der Mehrzahl von Vorprodukten (300, 300a) entlang des Zuführwegs (A) und Pressen der geräuschmindernden Körper (101) gegen das Band klebenden Materials (50).

7. Verfahren zur Herstellung geräuschmindernder Elemente (100) nach einem oder mehreren der vorhergehenden Ansprüche, umfassend ein Vorwärtsbewegen des Bandes klebenden Materials (50), das auf einem Betriebsförderer (10) aufliegend angeordnet ist, entlang des Zuführwegs (A).

8. Verfahren zur Herstellung geräuschmindernder Elemente (100) nach Anspruch 7, umfassend eine Vorwärtsbewegen des Kopfvorprodukts (300a) entlang des Zuführwegs (A) vom Betriebsförderer (20) zu einem Ausgabeförderer (20), der sich stromabwärts des Betriebsförderers (10) entlang des Zuführwegs (A) befindet, wobei die Heizstation (70) einen Übergangsbereich (71) umfasst, der zwischen dem Betriebsförderer (10) und dem Ausgabeförderer (20) angeordnet ist, wobei das Anwenden einer Zugaktion auf das Kopfvorprodukt (300a) ein Steuern jeweiliger Zuführgeschwindigkeiten des Betriebsförderers (10) und des Ausgabeförderers (20) synchron zum Vorrücken des Kopfvorprodukts (300a) durch die Heizstation (70) umfasst, um das Kopfvorprodukt (300a) vom restlichen Vorprodukt (300) durch Zerreißen des Bandes klebenden Materials (50) am Übergangsabschnitt (55a) zu trennen.

9. Prozess zur Anwendung geräuschmindernder Elemente (100) auf einen Reifen (500) für Fahrzeugräder, umfassend:
a) Herstellen einer Mehrzahl geräuschmindernder Elemente (100), wobei jedes geräuschmindernde Element einen geräuschmindernden Körper (101) und eine Schicht klebenden Materials (102) umfasst, unter Anwendung eines Verfahrens zur Herstellung geräuschmindernder Elemente (100) nach einem oder mehreren der vorhergehenden Ansprüche;
b) Positionieren jedes geräuschmindernden Elements (100) in einer vorbestimmten Position auf einer radial inneren Fläche (501) eines Reifens (500) und In-Kontakt-bringen der Schicht klebenden Materials (102) mit der radial inneren Fläche (501).

10. Einheit (2) zum Herstellen geräuschmindernder Elemente (100) für einen Reifen (500) für Fahrzeugräder, wobei die Einheit (2) umfasst:
- einen Betriebsförderer (10), der zum Aufnehmen einer Mehrzahl von Vorprodukten (300, 300a) geräuschmindernder Elemente ausgelegt ist, die jeweils durch einen geräuschmindernden Körper (101, 101a) ausgebildet sind, der an einem aktiven Abschnitt (54, 54a) eines Bandes klebenden Materials (50) haftet, wobei zwei aktive Abschnitte (54, 54a) zweier aufeinanderfolgender Vorprodukte (300, 300a) durch einen Übergangsabschnitt (55, 55a) des Bandes klebenden Materials (50) verbunden sind, wobei der Betriebsförderer (10) zum Vorwärtsbewegen der Vorprodukte (300, 300a) entlang eines Zuführwegs (A) ausgelegt ist;
- einen Ausgabeförderer (20), der sich entlang des Zuführwegs (A) stromabwärts des Betriebsförderers (10) befindet;
**dadurch gekennzeichnet, dass** sie umfasst:
- eine Heizstation (70), die einen Übergangsbereich (71) umfasst, der zwischen dem Betriebsförderer (10) und dem Ausgabeförderer (20) angeordnet und zum Durchgang von zwei aufeinanderfolgenden Vorprodukten (300, 300a) ausgelegt ist, die durch den Übergangsabschnitt (55a) verbunden sind;
- einen Emitter (72) elektromagnetischer Strahlungen im Infrarotbereich, der in einer festen Position in Bezug auf den Betriebsförderer (10) und den Ausgabeförderer (20) angeordnet ist und eine Emissionsöffnung (73) aufweist, die dem Übergangsbereich (71) zugewandt und zum Erwärmen des Übergangsabschnitts (55a) ausgelegt ist;
- eine Steuereinheit (80), die so programmiert ist, dass sie synchron zum Vorrücken eines Kopfvorprodukts (300a) zweier Vorprodukte (300, 300a) durch die Heizstation (70) jeweilige Zuführgeschwindigkeiten des Betriebsförderers (10) und des Ausgabeförderers (20) steuert, um das Kopfvorprodukt (300a) von einem restlichen Vorprodukt (300) der zwei Vorprodukte (300, 300a) durch Zerreißen des Bandes klebenden Materials (50) am erwärmten Übergangsabschnitt (55a) zu trennen.

11. Einheit zum Herstellen geräuschmindernder Elemente (100) nach Anspruch 10, wobei die Steuereinheit (80) so programmiert ist, dass sie eine Intensität der elektromagnetischen Strahlungen, denen der Übergangsbereich (71) ausgesetzt wird, synchron zum Vorrücken des Kopfvorprodukts (300a) durch die Heizstation (70) zwischen einem Betriebswert, der dem Durchgang des aktiven Kopfabschnitts (54a) durch die Heizstation (70) entspricht, und einem Grenzwert modifiziert, der dem Durchgang des Übergangsabschnitts (55a) durch die Heizstation (70) entspricht und der größer als der Betriebswert und so ist, dass er den Übergangsabschnitt (55a) erwärmt.

12. Einheit zum Herstellen geräuschmindernder Elemente (100) nach Anspruch 10 oder 11, wobei die Emissionsöffnung (73) sich überwiegend in einer Richtung senkrecht zum Zuführweg (A) über eine Länge (L) erstreckt, die mindestens gleich einer Breite des Bandes klebenden Materials (50) ist.

13. Einheit zum Herstellen geräuschmindernder Elemente (100) nach einem oder mehreren der Ansprüche 10 bis 12, wobei die Steuereinheit (80) ein Modul (81) zum Anpassen einer elektrischen Versorgungsleistung des Emitters (72) umfasst, das so programmiert ist, dass es die elektrische Versorgungsleistung synchron zum Vorrücken des Kopfvorprodukts (300a) durch die Heizstation (70) zwischen einer elektrischen Betriebsleistung zum Erzeugen elektromagnetischer Strahlungen mit einer Intensität gleich einem Betriebswert, der dem Durchgang des aktiven Kopfabschnitts (54a) durch die Heizstation (70) entspricht, und einer elektrischen Grenzleistung zum Erzeugen elektromagnetischer Strahlungen mit einer Intensität gleich einem Grenzwert modifiziert, der dem Durchgang des Übergangsabschnitts (55a) durch die Heizstation (70) entspricht und der größer als der Betriebswert und so ist, dass er den Übergangsabschnitt (55a) erwärmt.

14. Einheit zum Herstellen geräuschmindernder Elemente (100) nach einem oder mehreren der Ansprüche 10 bis 12, umfassend einen Bildschirm (90), der in Bezug auf den Emitter (72) zwischen einer aktiven Position, in der der Bildschirm (90) zwischen den Emitter (72) und die Heizstation (70) eingefügt ist, wobei die aktive Position so ist, dass der aktive Kopfabschnitt (54a) elektromagnetischen Strahlungen mit einer Intensität gleich einem Betriebswert ausgesetzt wird, der dem Durchgang des aktiven Kopfabschnitts (54a) durch die Heizstation (70) entspricht, und einer passiven Position, die von der aktiven Position verschieden und so ist, dass der Übergangsabschnitts (55a) elektromagnetischen Strahlungen mit einer Intensität gleich einem Grenzwert ausgesetzt wird, der dem Durchgang des Übergangsabschnitts (55a) durch die Heizstation (70) entspricht und der größer als der Betriebswert und so ist, dass er den Übergangsabschnitt (55a) erwärmt, bewegt werden kann, und wobei die Steuereinheit (80) so programmiert ist, dass sie die Position des Bildschirms (90) synchron zum Vorrücken des Vorprodukts (300) durch die Heizstation (70) ändert.

15. Vorrichtung (1) zum Anwenden geräuschmindernder Elemente (100) auf einen Reifen (500) für Fahrzeugräder, umfassend:
- eine Einheit (2) zum Herstellen geräuschmindernder Elemente (100) nach einem oder mehreren der Ansprüche 10 bis 14;
- einen Hauptförderer (3) zum Zuführen der Reifen (500);
- einen Klebemanipulator (5) für die geräuschmindernden Elemente (100), der zum Aufnehmen jeweils eines geräuschmindernden Elements vom Ausgabeförderer (20) und Positionieren desselben in einer vorbestimmten Position auf einer radial inneren Fläche (501) des Reifens (500) und In-Kontakt-bringen einer Schicht klebenden Material (102) mit der radial inneren Fläche (501) ausgelegt ist.

## Revendications

1. Procédé pour fabriquer des éléments de réduction de bruit (100) pour un pneu (500) pour roues de véhicule, comprenant le fait :
- de fournir une pluralité de précurseurs (300, 300a) d'éléments de réduction de bruit (100) formés chacun par un corps de réduction de bruit (101, 101a) adhérant à une partie active respective (54, 54a) d'une bande de matériau adhésif (50), où deux parties actives (54, 54a) de deux précurseurs consécutifs (300, 300a) sont reliées par une partie de passage (55, 55a) de la bande de matériau adhésif (50) ;
- de faire passer lesdits deux précurseurs consécutifs (300, 300a) reliés par ladite partie de passage (55a) à travers un poste de chauffage (70) d'un trajet d'acheminement (A) ;
- d'exposer ladite partie de passage (55a) en transit dans le poste de chauffage (70) à des rayonnements électromagnétiques dans le domaine infrarouge de manière à chauffer ladite partie de passage (55a) ;
- d'exercer une action de traction sur un précurseur de tête (300a) desdits deux précurseurs (300, 300a), loin du précurseur restant (300), jusqu'à ce que ladite bande de matériau adhésif (50) soit déchirée au niveau de ladite partie de passage (55a) chauffée et l'obtention d'un élément de réduction de bruit (100) dans lequel une couche de matériau adhésif (102) est réalisée par une partie de tête active (54a) détachée de la partie active restante (54).

2. Procédé pour fabriquer des éléments de réduction de bruit (100) selon la revendication 1, comprenant le fait de modifier, en synchronisation avec l'avancement du précurseur de tête (300a) à travers le poste de chauffage (70), une intensité des rayonnements électromagnétiques auxquels ladite partie de passage (55a) est exposée entre une valeur de service correspondant au transit de ladite partie de tête active (54a) à travers ledit poste de chauffage (70), et une valeur de coupure correspondant au transit de ladite partie de passage (55a) à travers ledit poste de chauffage (70), ladite valeur de coupure étant supérieure à la valeur de service et elle est telle qu'elle chauffe ladite partie de passage (55a).

3. Procédé pour fabriquer des éléments de réduction de bruit (100) selon une ou plusieurs des revendications précédentes, dans lequel lesdits rayonnements électromagnétiques dans le domaine infrarouge sont générés par un émetteur (72) de rayonnements électromagnétiques dans le domaine infrarouge agencé dans une position fixe par rapport audit trajet d'acheminement (A).

4. Procédé pour fabriquer des éléments de réduction de bruit (100) selon la revendication 3, dans lequel la modification de l'intensité de rayonnements électromagnétiques comprend la modification, en synchronisation avec l'avancement du précurseur de tête (300a) à travers le poste de chauffage (70) d'une puissance d'alimentation électrique de l'émetteur (72) entre une puissance de service électrique telle qu'elle génère des rayonnements électromagnétiques ayant une intensité égale à une valeur de service correspondant au transit de ladite partie de tête active (54a) à travers ledit poste de chauffage (70), et une puissance de coupure électrique telle qu'elle génère des rayonnements électromagnétiques avec une intensité égale à une valeur de coupure correspondant au transit de ladite partie de passage (55a) à travers ledit poste de chauffage (70), supérieure à la valeur de service et telle qu'elle chauffe ladite partie de passage (55a).

5. Procédé pour fabriquer des éléments de réduction de bruit (100) selon la revendication 3, dans lequel la modification de l'intensité de rayonnements électromagnétiques comprend la modification, en synchronisation avec l'avancement du précurseur de tête (300a) à travers le poste de chauffage (70), d'une position d'un écran (90) par rapport audit émetteur (72) entre une position active, dans laquelle ledit écran (90) est interposé entre ledit émetteur (72) et une zone de passage (71) dudit poste de chauffage (70), ladite position active étant telle qu'elle expose la partie de tête active (54a) à des rayonnements électromagnétiques avec une intensité égale à une valeur de service correspondant au transit de ladite partie de tête active (54a) à travers ledit poste de chauffage (70), et une position passive différente de ladite position active et telle qu'elle expose la partie de passage (55a) à des rayonnements électromagnétiques avec une intensité égale à une valeur de coupure correspondant au transit de ladite partie de passage (55a) à travers ledit poste de chauffage (70), supérieure à la valeur de service et telle qu'elle chauffe ladite partie de passage (55a).

6. Procédé pour fabriquer des éléments de réduction de bruit (100) selon une ou plusieurs des revendications précédentes, comprenant le fait de faire avancer ladite pluralité de précurseurs (300, 300a) par intermittence le long du trajet d'acheminement (A) et de presser lesdits corps de réduction de bruit (101) contre ladite bande de matériau adhésif (50).

7. Procédé pour fabriquer des éléments de réduction de bruit (100) selon une ou plusieurs des revendications précédentes, comprenant le fait de faire avancer, le long du trajet d'acheminement (A), la bande de matériau adhésif (50) agencée de manière à reposer sur un convoyeur de service (10).

8. Procédé pour fabriquer des éléments de réduction de bruit (100) selon la revendication 7, comprenant le fait de faire avancer le précurseur de tête (300a) le long du trajet d'acheminement (A) du convoyeur de service (10) à un convoyeur de sortie (20) situé en aval dudit convoyeur de service(10) le long du trajet d'acheminement (A), ledit poste de chauffage (70) comprenant une région de passage (71) agencée entre ledit convoyeur de service (10) et ledit convoyeur de sortie (20), dans lequel le fait d'exercer une action de traction sur le précurseur de tête (300a) comprend la commande, en synchronisation avec l'avancement du précurseur de tête (300a) à travers le poste de chauffage (70), de vitesses d'acheminement respectives dudit convoyeur de service (10) et dudit convoyeur de sortie (20) de manière à détacher ledit précurseur de tête (300a) du précurseur restant (300) en déchirant ladite bande de matériau adhésif (50) au niveau de la partie de passage (55a).

9. Procédé pour appliquer des éléments de réduction de bruit (100) à un pneu (500) pour roues de véhicule, comprenant le fait :
a) de fabriquer une pluralité d'éléments de réduction de bruit (100), où chaque élément de réduction de bruit comprend un corps de réduction de bruit (101) et une couche de matériau adhésif (102), d'appliquer un procédé pour fabriquer des éléments de réduction de bruit (100) selon une ou plusieurs des revendications précédentes ;
b) de positionner chaque élément de réduction de bruit (100) dans une position prédéterminée sur une surface radialement interne (501) d'un pneu (500), amenant ladite couche de matériau adhésif (102) en contact avec ladite surface radialement interne (501).

10. Unité (2) pour fabriquer des éléments de réduction de bruit (100) pour un pneu (500) pour roues de véhicule, dans laquelle ladite unité (2) comprend :
- un convoyeur de service (10) configuré pour recevoir une pluralité de précurseurs (300, 300a) d'éléments de réduction de bruit, chacun étant formé par un corps de réduction de bruit (101, 101a) adhérant à une partie active respective (54, 54a) d'une bande de matériau adhésif (50), où deux parties actives (54, 54a) de deux précurseurs consécutifs (300, 300a) sont reliées par une partie de passage (55, 55a) de la bande de matériau adhésif (50), ledit convoyeur de service (10) étant configuré pour faire avancer lesdits précurseurs (300, 300a) le long d'un trajet d'acheminement (A) ;
- un convoyeur de sortie (20) situé en aval dudit convoyeur de service (10) le long du trajet d'acheminement (A) ;
**caractérisée en ce qu'**elle comprend :
- un poste de chauffage (70) comprenant une zone de passage (71) disposée entre ledit convoyeur de service (10) et ledit convoyeur de sortie (20) adaptée au transit de deux précurseurs consécutifs (300, 300a) reliés par ladite partie de passage (55a) ;
- un émetteur (72) de rayonnements électromagnétiques dans le domaine infrarouge, agencé dans une position fixe par rapport audit convoyeur de service (10) et audit convoyeur de sortie (20) et ayant une ouverture d'émission (73) faisant face à ladite zone de passage (71), adapté pour chauffer ladite partie de passage (55a) ;
- une unité de commande (80) programmée pour commander, en synchronisation avec l'avancement d'un précurseur de tête (300a) desdits deux précurseurs (300, 300a) à travers le poste de chauffage (70), des vitesses d'acheminement respectives dudit convoyeur de service (10) et dudit convoyeur de sortie (20) de manière à détacher ledit précurseur de tête (300a) d'un précurseur restant (300) desdits deux précurseurs (300, 300a) en déchirant ladite bande de matériau adhésif (50) au niveau de la partie de passage chauffée (55a).

11. Unité pour fabriquer des éléments de réduction de bruit (100) selon la revendication 10, dans laquelle ladite unité de commande (80) est programmée pour modifier, en synchronisation avec l'avancement du précurseur de tête (300a) à travers le poste de chauffage (70), une intensité des rayonnements électromagnétiques auxquels ladite zone de passage (71) est exposée entre une valeur de service correspondant au transit de ladite partie de tête active (54a) à travers ledit poste de chauffage (70), et une valeur de coupure correspondant au transit de ladite partie de passage (55a) à travers ledit poste de chauffage (70) supérieure à la valeur de service et telle qu'elle chauffe ladite partie de passage (55a).

12. Unité pour fabriquer des éléments de réduction de bruit (100) selon la revendication 10 ou 11, dans laquelle ladite ouverture d'émission (73) s'étend principalement dans une direction perpendiculaire audit trajet d'acheminement (A) sur une longueur (L) égale à au moins une largeur de la bande de matériau adhésif (50).

13. Unité pour fabriquer des éléments de réduction de bruit (100) selon une ou plusieurs des revendications 10 à 12, dans laquelle ladite unité de commande (80) comprend un module (81) pour ajuster une puissance d'alimentation électrique de l'émetteur (72) programmé pour modifier, en synchronisation avec l'avancement du précurseur de tête (300a) à travers le poste de chauffage (70), ladite puissance d'alimentation électrique entre une puissance de service électrique telle qu'elle génère des rayonnements électromagnétiques avec une intensité égale à une valeur de service correspondant au transit de ladite partie de tête active (54a) à travers ledit poste de chauffage (70), et une puissance de coupure électrique telle qu'elle génère des rayonnements électromagnétiques avec une intensité égale à une valeur de coupure correspondant au passage de ladite partie de passage (55a) à travers ledit poste de chauffage (70), supérieure à la valeur de service et telle qu'elle chauffe ladite partie de passage (55a).

14. Unité pour fabriquer des éléments de réduction de bruit (100) selon une ou plusieurs des revendications 10 à 12, comprenant un écran (90) mobile par rapport audit émetteur (72) entre une position active, dans laquelle ledit écran (90) est interposé entre ledit émetteur (72) et ledit poste de chauffage (70), ladite position active étant telle qu'elle expose la partie de tête active (54a) à des rayonnements électromagnétiques avec une intensité égale à une valeur de service correspondant au transit de ladite partie de tête active (54a) à travers ledit poste de chauffage (70), et une position passive différente de ladite position active et telle qu'elle expose la partie de passage (55a) à des rayonnements électromagnétiques avec une intensité égale à une valeur de coupure correspondant au transit de ladite partie de passage (55a) à travers ledit poste de chauffage (70), supérieure à la valeur de service et telle qu'elle chauffe ladite partie de passage (55a), et où ladite unité de commande (80) est programmée pour changer la position dudit écran (90), en synchronisation avec l'avancement du précurseur (300a) à travers le poste de chauffage (70).

15. Appareil (1) pour appliquer des éléments de réduction de bruit (100) à un pneu (500) pour roues de véhicule, comprenant :
- une unité (2) pour fabriquer des éléments de réduction de bruit (100) selon une ou plusieurs des revendications 10 à 14 ;
- un convoyeur principal (3) pour acheminer les pneus (500) ;
- un manipulateur de liaison (5) desdits éléments de réduction de bruit (100) adapté pour prélever un élément de réduction de bruit à la fois du convoyeur de sortie (20) et le positionner dans une position prédéterminée sur une surface radialement interne (501) dudit pneu (500), amenant une couche de matériau adhésif (102) en contact avec ladite surface radialement interne (501).
